# EUROPEAN PATENT SPECIFICATION

(11) **EP 3 670 472 B1**
(45) Date of publication and mention of the grant of the patent: **21.07.2021**
(21) Application number: 19218460.4
(22) Date of filing: 20.12.2019
(51) Int. Cl.: C04B 28/02, C04B 18/08

(54) **METHOD FOR TREATING A BOTTOM ASH COMING FROM A WASTE INCINERATION PLANT**
VERFAHREN ZUR BEHANDLUNG EINER UNTENASCHE AUS EINER ABFALLVERBRENNUNGSANLAGE
PROCÉDÉ DE TRAITEMENT D'UNE CENDRE INFÉRIEURE PROVENANT D'UNE INSTALLATION D'INCINÉRATION DE DÉCHETS

(30) Priority: 20.12.2018 BE 201805923
(43) Date of publication of application: 24.06.2020
(73) Proprietor: Dec N.V. (Deme Environmental Contractors), 2070 Zwijndrecht (BE)
(72) Inventor: Maes, Dimitri Godelieve Stefaan, 2160 Wommelgem (BE); Lepère, Xavier Claude Lucien, 1190 Brussel (BE)
(74) Representative: Brouwer, Hendrik Rogier

(56) References cited:
- WO-A1-2009/138823
- US-A1- 2014 202 931
- VAN GERVEN T ET AL: "Carbonation of MSWI-bottom ash to decrease heavy metal leaching, in view of recycling", WASTE MANAGEMENT, ELSEVIER, NEW YORK, NY, US, vol. 25, no. 3, 1 January 2005 (2005-01-01), pages 291-300, XP027619143, ISSN: 0956-053X [retrieved on 2005-01-01]

## Description

### TECHNICAL FIELD OF THE INVENTION

The invention relates to a method for treating a bottom ash coming from a waste incineration plant. The invention also relates to the use of the sand fraction and rubble fraction resulting from the method as building material in accordance with Vlarema 2.3.2..

### BACKGROUND OF THE INVENTION

Waste is nowadays processed on a large scale in waste incineration plants, also referred to as WIP. Such a WIP is an installation which is intended specifically for incinerating (domestic and other) waste.

In the incineration of waste bottom ash remains on the bottom of the WIP boiler, while so-called fly ash is entrained by the flue gas. Harmful substances present in the flue gas are generally removed from the flue gas. Acids such as hydrogen chloride and hydrogen fluoride, and heavy metals such as lead, cadmium and mercury, as well as other organic substances such as dioxins can thus be removed.

The bottom ash is the product of melting and sintering of the waste, and is generally tapped off in solid or liquid form. The residual products of the incineration, fly ash and bottom ash, can if desired be usefully employed. It is thus for instance possible to use fly ash as filler in asphalt. Bottom ash can also be used in the building industry, for instance as raising material in road construction or as a sand substitute.

The reuse of bottom ash in building applications necessitates additional measures which ensure that the contaminants present in the bottom ash cannot find their way into the ground. The application of bottom ash in road construction thus requires covering with clay or plastic film in order to prevent contaminants present in the bottom ash from finding their way into the groundwater.

The article of van Gerven et al.: 'Carbonation of MSWI-bottom ash to decrease heavy metal leaching, in view of recycling' in Waste management, Elsevier, New York, vol. 25, no. 3 of January 1, 2005 discloses carbonation of sand originating from bottom ash on a lab-scale by contacting with CO₂. Some heavy metals are removed from the recovered sand but others are not. The bottom ash used in this paper went through several wet-sieving steps to separate a heavy fraction larger than 50 mm from the main stream. The main stream again went through a wet sieving process to produce three fractions: a sludge and sand fraction with particles from 0-2 mm, and granulate fractions of 2-6 and 6-50 mm. An organic fraction was not separated. The fine grained fraction comprises a sludge fraction (0-0.1 mm) and a sand fraction (0.1-2 mm).

Although known separating and processing techniques have attempted to achieve that bottom ash can for instance be used as raw material for cement and concrete, providing a method whereby a sufficient purity can be achieved to enable bottom ash to be used as sand substitute without additional measures being needed at the construction site has so far proved unsuccessful.

### SUMMARY OF THE INVENTION

The method according to the invention has for its object to provide an improved method for treating a bottom ash coming from a waste incineration plant, with a view to achieving a higher purity of the processed bottom ash than heretofore known.

The method according to the invention has for this purpose the feature as described in claim 1. More particularly, according to the invention a method is provided for treating a bottom ash coming from a waste incineration plant, comprising the steps of:
a) removing particles with a size > 70 mm from the bottom ash with filtering means;
b) subjecting the bottom ash with particles ≤ 70 mm, resulting after step a), to a wet physicochemical separation which results in a sand, rubble, organic and sludge fraction;
c) removing non-ferromagnetic metals from the sand and the rubble fraction with separating means; and
d) chemically immobilizing the sand fraction resulting from step c) by carbonation of said sand fraction, wherein the carbonation comprises of adding cement, sand, activated carbon and carbon dioxide to the sand fraction resulting from step c).

With the invented method a sand fraction can be obtained which is pure to an extent such that it can be used substantially unmodified in construction materials. Moreover, at least 50% by weight sand fraction is obtained from 100% by weight bottom ash.

Approximately 50% by weight of a bottom ash can consist of a fine fraction of solid substance (a fraction with particle sizes of 0.5-3 mm), and a coarse fraction with greater particle dimensions. A bottom ash can in addition comprise ferromagnetic and non-ferromagnetic metals, wherein the proportion of non-ferrous metals (all metals apart from iron, steel and stainless steel) can amount to about 3% by weight of the bottom ash. Examples of non-ferrous metals which can be found in bottom ash are copper and aluminium.

The non-ferrous metals, which have a higher density than the rest (including sand), can be separated on the basis thereof from said rest in a density separator. Use can also be made of the electrical properties of metals in an eddy current separation. Eddy current separators however only function properly with the fraction from 6 mm. Other separating techniques are in development for the finer fraction.

The invented method results in a readily reusable sand fraction, which moreover uses a large part of the bottom ash. Bottom ash particles with dimensions of up to and including 70 mm are according to the invention indeed used for recovering reusable substances therefrom. This is illustrated by the consideration that approximately 50% by weight of a typical bottom ash consists of particles with dimensions of up to 3 mm.

In an embodiment of the invention it is otherwise possible to characterize the method in that step a) comprises of removing particles with a size > 60 mm, more preferably > 50 mm, still more preferably > 40 mm from the bottom ash with filtering means.

According to the invention, particles with a size > 70 mm are removed from the bottom ash with filtering means in step a). Suitable filtering means comprise for instance commercially available mobile screening installations such as the Terex Finlay with flat screen decks, the Terraselect drum screen, and the Terex Finlay with 3D-combi screen box.

In a preferred embodiment of the method according to the invention the filtering means comprise a drum screen. It has been found that a drum screen is especially well able to remove unincinerated pieces of plastic and/or cotton which may be present in the bottom ash, together with steel and copper wires which may also be present, from the bottom ash in effective manner, wherein there is almost no clogging of screening surfaces after a determined commissioning time.

There is also a wide choice of the separating means applied in step c) for removal of non-ferromagnetic metals from the sand and rubble fraction coming from step b). It is thus possible to use commercially available optical separators such as VIS, NIR, XRF, .... Such optical separators, such as for instance a Near Infra Red (NIR) separator can sort according to wavelength (colour). An optical separator typically comprises a conveyor belt which carries along the materials to be separated under an illumination and detection unit. The detection unit recognizes preprogrammed materials and controls a PLC which can operate air valves. The air valves generate an air pulse whereby the materials for sorting are removed from the material flow. Separation on the basis of X-ray and X-ray fluorescence is also possible (XRF). In this manner of optical separating a difference in density, in halogens and/or in organic constituents is detected. It is hereby possible to separate for instance light from heavy metals, but also different plastics from each other.

Another option relates to the application of density separators and of eddy current separators.

A preferably applied embodiment of the invention comprises a method wherein the separating means comprise an eddy current separator. It was found that, compared to other separating techniques such as a separation on the basis of density, the separation of non-ferrous metals in particular could be performed significantly more selectively with an eddy current separator, wherein 80% and more of non-ferrous metals could be removed from the introduced material. The effective separation between constituents with roughly the same density (for instance aluminium and gravel) in particular is an advantage of this embodiment.

An eddy current separator generally comprises a relatively fast-rotating rotor on which magnets are arranged, which are mounted alternatingly. A relatively slow-rotating non-metal conveyor belt is arranged round the rotor. The rotation of the magnets generates an induction current in the conductive (metallic) particles supplied on the conveyor belt. The induction current circulating in the conductive particles generates a secondary magnetic field whereby the particle is repelled when it enters the magnetic field of the rotor. The repulsion removes the relevant particle from the material flow.

In a preferred embodiment remnants of ferromagnetic material which may still be present in the sand and rubble fractions can be removed by a method wherein the separating means comprise a combination of an eddy current separator and a magnetic separator. Good results have been achieved with a method wherein an overband magnetic separator or a drum magnetic separator is applied, or a combination of both said separators.

According to step d) of the invented method, the sand fraction resulting from step c) is chemically immobilized. A plurality of per se known chemical formulas are also available for this step. A particularly stable immobilization is achieved by the invented method wherein the chemical immobilization of the sand fraction resulting from step c) comprises a carbonation of this sand fraction, comprising adding cement, sand, activated carbon and carbon dioxide to the sand fraction resulting from step c). All this results in an accelerated carbonation of the sand fraction, whereby this fraction complies with the building material standard and could thus be employed freely as secondary building material in civil works. The sand fraction obtained with the carbonation is stable enough to prevent undesired leaching, at least leaching which does not comply with the building material standard. In a carbonation the added carbon dioxide reacts with calcium hydroxide present in the sand fraction, wherein insoluble calcium carbonate is formed. This results in a more stable sand fraction. The reaction takes place via the formation of carbonic acid from carbon dioxide and water, and the conversion of the unstable carbonic acid and calcium hydroxide into calcium carbonate.

Another embodiment of the invention provides a method wherein the wet physicochemical separation comprises the following steps of:
b1) first removing ferromagnetic metals from the bottom ash with particles ≤ 70 mm with magnetic separating means;
b2) separating the bottom ash resulting after step b1) into a sand fraction, a rubble fraction, an organic fraction and a sludge fraction by means of wet screening;
b3) separating the sand fraction resulting from step b2) into the sludge fraction and a sand fraction resulting from step b3) by means of a cyclone.

The magnetic separating means preferably comprise an overband magnetic separator. The ferromagnetic particles present in the bottom ash are hereby removed with relatively high selectivity.

The wet physicochemical separation (or cleaning, treatment) has the advantage, among others, that at least a part of the leachable constituents present in the bottom ash is removed from the bottom ash. The wet physicochemical separation can for instance, and is preferably, performed using water.

For reasons of efficiency and reducing environmental effects the wet physicochemical separation is in an embodiment of the method performed in a closed water circuit. Contaminated water is here preferably removed from the water circuit and purified water supplied to the water circuit. This removal and supply can for instance take place when the water present in the water circuit is too contaminated. All contamination in principle indeed remains present in the system due to the closed water circuit. This can eventually result in the concentration of contaminants in the water being too high.

A preferred embodiment of the invention relates to a method wherein the purified water comprises cleaned removed water. The cleaning can be performed in known manner, for instance by a combination of coagulation, flocculation and then also a biological cleaning.

After this cleaning the water can once again be supplied to the water circuit, or the cleaned water can be discharged.

In another embodiment of the invention a method is provided which further comprises a step b4) in which the rubble fraction resulting from step b2) is cleaned with a logwasher and separated into a light and a heavy rubble fraction. The light rubble fraction is cleaned in this step b4) by treatment in the logwasher, this to a level of cleaning such that it can be employed as secondary raw material.

Another embodiment is provided by a method wherein the heavy rubble fraction resulting from step b4) is the rubble fraction resulting from the wet physicochemical separation.

An embodiment comprises of separating the sand fraction resulting from step b2) into a sludge fraction and a sand fraction resulting from step b3) by means of a cyclone. An upflow column of the cyclone, preferably a hydrocyclone, can here fulfil a dual function. On the one hand, a part of the organic substances which may be present in the sand fraction is removed from the sand fraction, while the sand fraction is on the other hand also washed.

In yet another embodiment of the method according to the invention the sand fraction resulting from step b3) is preferably drained with a draining screen in a step b5).

It is here advantageous according to an embodiment to characterize the method in that the sand fraction resulting from step b5) is the sand fraction resulting from the wet physicochemical separation, or is similar thereto.

The sludge fraction produced by step b3) can optionally be stored as waste matter. An improved embodiment however relates to a method wherein the sludge fraction resulting from step b3) is thickened in a lamella settling unit in a step b6) and, still more preferably, the thickened sludge fraction resulting from step b6) is converted into a filter cake in a screen belt press in a step b7). Conversion into a filter cake can for instance take place by the addition of chemicals and by application of a screen belt press. A filter cake can be stored in simple manner.

A lamella settling unit (or plate settling unit) comprises a reservoir provided with an internally arranged plate pack and a collecting system for settled particles. Particles which make contact with the lamella due to the force of gravity are carried downward along the lamella. Owing to the relatively limited path having to be travelled by the settled particles between the lamella or plates, a lamella settling unit can take a relatively compact form as compared to a conventional settling unit.

The physicochemical separation can ensure that different ions (anions and cations) are removed from the bottom ash. Anions can for instance comprise chlorides and sulphates, while typical cations can comprise calcium, sodium and potassium.

### BRIEF DESCRIPTION OF THE FIGURES

The invention will now be further elucidated with reference to the following three figures, without otherwise being limited thereto. In the figures:
Figure 1 is a schematic representation of a number of sub-steps of the method for cleaning bottom ash according to an embodiment of the invention;
Figure 2 is a schematic representation of a number of subsequent sub-steps of the method for cleaning bottom ash according to an embodiment of the invention; and, finally
Figure 3 is a schematic representation of a number of final sub-steps of the method for cleaning bottom ash according to an embodiment of the invention.

### DETAILED DESCRIPTION OF AN EXEMPLARY EMBODIMENT

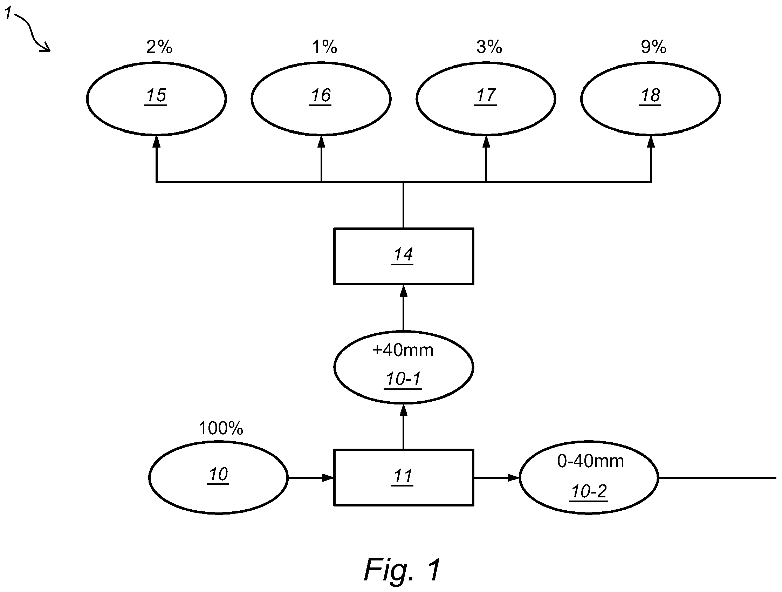

Referring to figures 1, 2 and 3, 100% by weight bottom ash 10 is supplied to a number of coupled devices 1, 2 and 3, which are each configured to perform a number of sub-steps in the context of cleaning of contaminated bottom ash 10. The bottom ash 10, particularly WIP bottom ash, comprises the stony residue which remains on the bottom of a waste incineration installation (not shown) after incineration of waste, particularly domestic waste. In some cases bottom ash 10 can for instance comprise a fraction of coarse particles (granulate) and a fraction of fine particles (sand) of solid substance, which can be useful in the use of bottom ash as building material, and further fractions undesirable for application in building materials, such as coarse rubble, fine rubble, ferromagnetic metals, non-ferrous metals, organic material and fine sludge particles. The bottom ash can also comprise undesired salts.

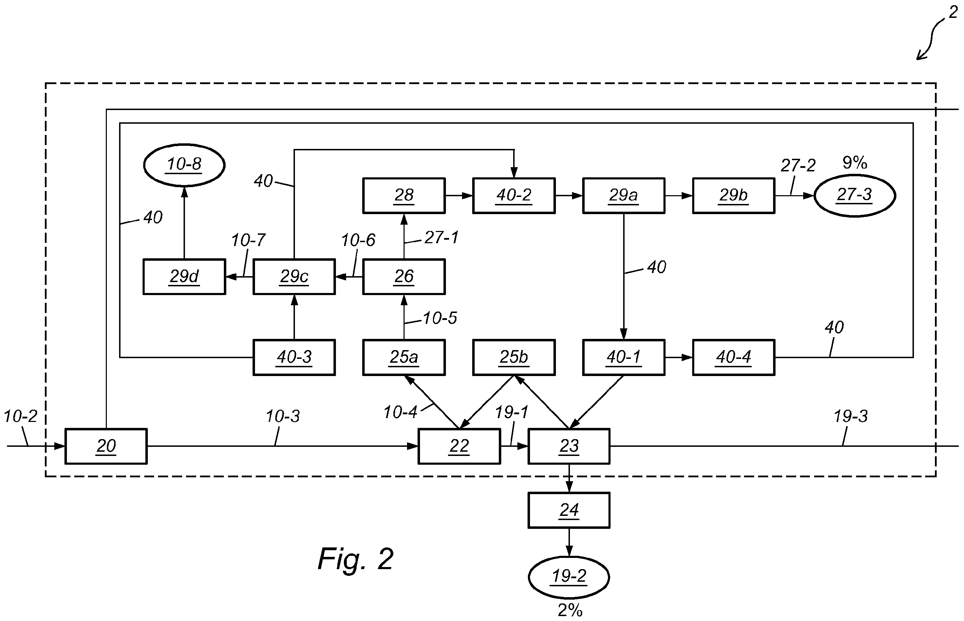

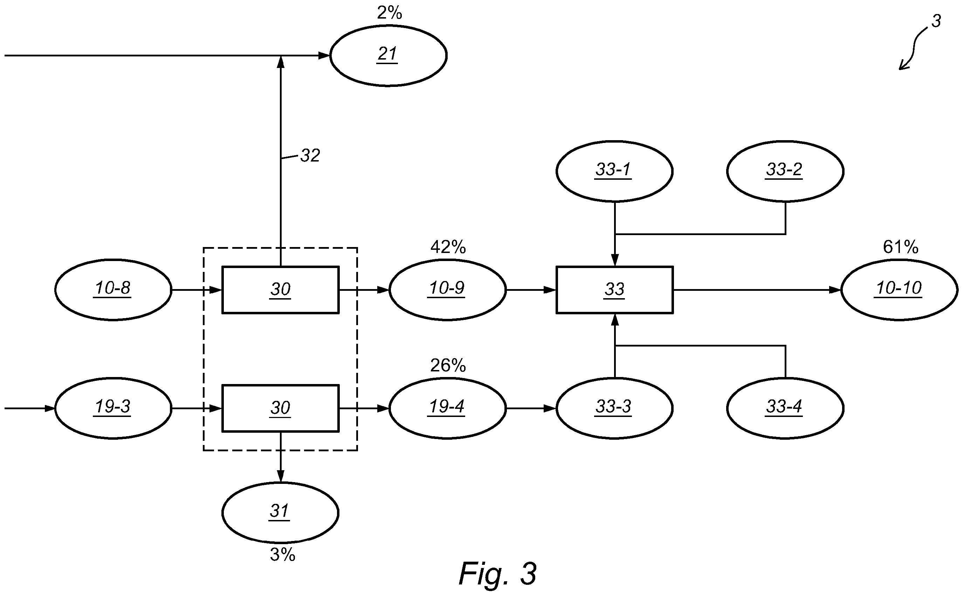

A number of sub-steps to be performed in device 1 relates to a pretreatment of the contaminated bottom ash 10 wherein particles with a size < 40 mm are removed from bottom ash 10 with filtering means in a step a). A number of subsequent sub-steps to be performed in device 2 (see figure 2) relates to a further treatment wherein the bottom ash 10-2 (with particles ≤ 40 mm) resulting after step a) is subjected in a step b) to a wet physicochemical separation, which results in a sand fraction, a light granulate fraction, a granulate fraction and a sludge fraction. A number of sub-steps to be performed in device 3 (see figure 3) relates to a final treatment of the contaminated bottom ash 10 wherein non-ferromagnetic metals are removed from the sand and the granulate fraction with separating means in a step c), and wherein the sand fraction resulting from step c) is chemically immobilized in a step d). According to the invention, the contaminated bottom ash 10 is separated in the devices 1, 2 and 3 into desired fractions which comprise cleaned granulate 11 and cleaned sand 12. For application as building material, undesired fractions such as organic material 16, sludge 98 and all other above stated undesired fractions are further substantially removed from the contaminated bottom ash 10.

By way of example, in the embodiment of the invention shown in figure 1 particles with a size > 40 mm are removed from contaminated bottom ash 10 with a drum screen 11, for instance available from the company Terra Select. The fraction 10-1 with particles > 40 mm are then further divided with a preferably manual separator into 4 fractions: a ferromagnetic metal fraction 15, a non-ferrous metal fraction 16, a coarse gravel fraction 17 and a residual fraction 18. The coarse gravel fraction 17 can comprise particles of up to 70 mm. In the shown example the coarse fraction 13 coming from the contaminated bottom ash 10 comprises, rounded off, approximately 2% by weight ferromagnetic metal fraction 15, 1% by weight non-ferrous metal fraction 16, 3% by weight coarse gravel fraction 17 and 9% by weight residual fraction 18, relative to 100% by weight. The residual fraction 18 can for instance comprise substantially unincinerated residues of cotton, plastic and wood, and can be fed back into the WIP. The above stated fractions 15-18 can be used for determined applications, but are undesirable as building material in the context of application of bottom ash 10.

The relatively fine fraction 10-2 of the bottom ash 10 with particles ≤ 40 mm is then supplied to a device 2, which is shown in more detail in figure 2. In the shown example the bottom ash fraction 10-2 is subjected to a separation of ferromagnetic material which may still be present in bottom ash fraction 10-2 by carrying it along a number of overband magnets 20 and discharging it to a storage for the ferromagnetic fraction 21. In the shown example the bottom ash fraction 10-2 comprises approximately 2% by weight ferromagnetic metal fraction 21, relative to 100% by weight original bottom ash 10. This separated ferromagnetic metal fraction 21 can optionally be combined with the previously separated ferromagnetic metal fraction 15.

In a subsequent step rubble and material foreign to the soil are then separated via a wet screening 22 with a mesh size of 4 mm from the bottom ash fraction 10-3 resulting from the previous step. A light organic fraction 19-2 with a particle size of up to 4 mm is then removed via a logwasher 23 and a drying installation 24 from the separated rubble 19-1. The logwasher 23 simultaneously provides for a cleaning of the rubble, whereby this rubble can optionally be employed as secondary raw material. A relatively coarse rubble fraction 19-3 with a particle size of between 4-40 mm is carried through to device 3 (see below).

The remaining bottom ash fraction 10-4 is supplied via a settling reservoir 25a to one or more hydrocyclones 26 connected in parallel. If desired, a second settling reservoir 25b can be fed from logwasher 23, to which latter process water is also supplied from a process water buffer vessel 40-1. The sludge present in the bottom ash fraction 10-5 resulting after settling reservoir 25a is removed via the hydrocyclones 26, after which this sludge 27-1 is then thickened in a lamella settling unit 29a via a drum screen 28 and a process water buffer vessel 40-2. The addition of suitable chemicals and passage along a screen belt press 29b then transforms the thickened sludge 27-2 into filter cakes 27-3. In the shown example approximately 9% by weight sludge filter cake 27-3 is recovered from the original bottom ash 10, relative to 100% by weight original bottom ash 10.

The bottom ash fraction 10-6 coming from hydrocyclones 26 is supplied to an upflow column 29c. Upflow column 29c preferably fulfils a dual function. On the one hand, the organic fraction present in bottom ash fraction 10-6 is removed, and on the other the sand fraction 10-8 recovered from the step is washed. Sand fraction 10-8 can then also be drained using a draining screen 29d.

The above described wet physicochemical treatment preferably makes use of a closed water circuit 40 in which a number of process water buffer vessels (40-1, 40-2, 40-3) is incorporated. A sand filter 40-4 incorporated in water circuit 40 removes fine sand particles at least partially from the process water. In order to prevent excessive contamination of the process water flowing in water circuit 40 process water can optionally be tapped off from circuit 40 for cleaning, and clean water supplied. The cleaning of the process water in circuit 40 preferably comprises of a coagulation, flocculation and a biological cleaning of the process water. After such a cleaning the cleaned process water can if desired be returned to circuit 40 or be discharged.

A purified sand fraction 10-8 and a purified, relatively coarse rubble fraction 19-3 with a particle size between 4-40 mm result from the above described physicochemical treatment of bottom ash 10. Both can be usefully employed in building materials.

In the given example a relatively high concentration of valuable non-ferrous metals still remains in the purified, relatively coarse rubble fraction 19-3 after the physicochemical cleaning. It has been found that this non-ferrous fraction 31 can be removed with good results by carrying the purified, relatively coarse rubble fraction 19-3 and the purified sand fraction 10-8 through an assembly 30 of an eddy current separator and a (number of) overband and drum magnetic separators. A ferromagnetic fraction 32 which may still be present in the fractions 10-8 and 19-3 is hereby simultaneously separated and discharged to the storage for the previously separated ferromagnetic fraction 21. This step results in a further purified rubble fraction 19-4 and sand fraction 10-9.

In order to make the purified sand fraction 10-9 more suitable as building material (to have it comply with leaching standards incorporated in the building material standard as according to Vlarema appendix 2.3.2B) this fraction is immobilized in a subsequent step.

This subsequent step comprises an accelerated carbonation step 33 in which cement 33-1, sand 33-2, activated carbon 33-3 and carbon dioxide (CO₂) 33-4 are added to the sand fraction 10-9. The sand product 10-10 obtained therefrom complies with the building material standard and can thus in principle be applied freely as secondary building material in civil works. A small amount of non-ferrous metals which may remain can if desired still be removed from sand fraction 10-10, wherein eddy current separation is preferably applied.

With the invented method a sand fraction can be obtained which is pure to an extent such that it can be used substantially unmodified in construction materials. Moreover, in the given example approximately 61% by weight of the purified sand fraction 10-10 is obtained from 100% by weight bottom ash.

The method according to the invention can be applied both on site (in situ, in the vicinity of a waste incineration plant) and at a different location (ex situ, for instance in a processing centre). The method according to the invention is preferably applied in situ.

The invention is not limited to the method stated above and described in the example, and many variations are possible within the scope of protection defined by the appended claims.

## Claims

1. Method for treating a bottom ash coming from a waste incineration plant, comprising the steps of:
a) removing particles with a size > 70 mm from the bottom ash with filtering means;
b) subjecting the bottom ash with particles ≤ 70 mm, resulting after step a), to a wet physicochemical separation which results in a sand, rubble, organic and sludge fraction;
c) removing non-ferromagnetic metals from the sand and the rubble fraction with separating means; and
d) chemically immobilizing the sand fraction resulting from step c) by carbonation, wherein the carbonation comprises of adding cement, sand, activated carbon and carbon dioxide to the sand fraction resulting from step c).

2. Method according to claim 1, wherein the filtering means comprise a drum screen.

3. Method according to any one of the foregoing claims, wherein the separating means comprise an eddy current separator.

4. Method according to any one of the foregoing claims, wherein the separating means comprise a combination of an eddy current separator and a magnetic separator.

5. Method according to claim 4, wherein the magnetic separator comprises a drum magnetic separator.

6. Method according to any one of the foregoing claims, wherein the wet physicochemical separation comprises the following steps of:
b1) removing ferromagnetic metals from the bottom ash with particles ≤ 70 mm with magnetic separating means;
b2) separating the bottom ash resulting after step b1) into a sand fraction, a rubble fraction, an organic fraction and a sludge fraction by means of wet screening;
b3) separating the sand fraction resulting from step b2) into a sludge fraction and a sand fraction resulting from step b3) by means of a cyclone.

7. Method according to claim 6, further comprising a step b4) in which the rubble fraction resulting from step b2) is cleaned with a logwasher and separated into a light and a heavy rubble fraction.

8. Method according to claim 7, wherein the heavy rubble fraction resulting from step b4) is the rubble fraction resulting from the wet physicochemical separation.

9. Method according to any one of claims 6-8, wherein an upflow column of the cyclone, preferably a hydrocyclone, removes a part of the organic substances which may be present in the sand fraction from the sand fraction, while also washing the sand fraction.

10. Method according to claim 6, wherein the sand fraction resulting from step b3) is drained with a draining screen in a step b5).

11. Method according to claim 10, wherein the sand fraction resulting from step b5) is the sand fraction resulting from the wet physicochemical separation.

12. Method according to claim 6, wherein the sludge fraction resulting from step b3) is thickened in a lamella settling unit in a step b6).

13. Method according to claim 12, wherein the thickened sludge fraction resulting from step b6) is converted into a filter cake in a screen belt press in a step b7).

14. Method according to any one of the foregoing claims 6-13, wherein the magnetic separating means comprise an overband magnetic separator.

15. Method according to any one of the foregoing claims, wherein the wet physicochemical separation is performed in a closed water circuit.

16. Method according to claim 15, wherein contaminated water is removed from the water circuit and purified water supplied to the water circuit.

17. Method according to claim 16, wherein the purified water comprises cleaned removed water.

## Patentansprüche

1. Verfahren zum Behandeln einer Bodenasche, die aus einer Abfallverbrennungsanlage stammt, das die Schritte aufweist:
a) Entfernen von Partikeln mit einer Größe > 70 mm aus der Bodenasche mit Filtermitteln;
b) Unterziehen der Bodenasche mit Partikeln ≤ 70 mm, die aus Schritt a) resultieren, einer physiochemischen Nasstrennung, was einen Sand-, Schutt-, organischen und Schlammanteil liefert;
c) Entfernen von nicht-ferromagnetischen Metallen aus dem Sand- und dem Schuttanteil mit Trennmitteln; und
d) chemisches Immobilisieren des Sandanteils, der aus Schritt c) resultiert, durch Verkohlung, wobei die Verkohlung das Hinzufügen von Zement, Sand, Aktivkohle und Kohlendioxid zu dem aus Schritt c) resultierenden Sandanteil aufweist.

2. Verfahren nach Anspruch 1, wobei das Filtermittel ein Trommelsieb aufweist.

3. Verfahren nach einem der vorhergehenden Ansprüche, wobei das Trennmittel einen Wirbelstromscheider aufweist.

4. Verfahren nach einem der vorhergehenden Ansprüche, wobei das Trennmittel eine Kombination aus einem Wirbelstromscheider und einem Magnetscheider aufweist.

5. Verfahren nach Anspruch 4, wobei der Magnetscheider einen Trommelmagnetscheider aufweist.

6. Verfahren nach einem der vorhergehenden Ansprüche, wobei die physiochemische Nasstrennung die folgenden Schritte aufweist:
b1) Entfernen von ferromagnetischen Metallen aus der Bodenasche mit Partikeln ≤ 70 mm mit Magnettrennmitteln;
b2) Trennen der Bodenasche, die aus Schritt b1) resultiert, in einen Sandanteil, einen Schuttanteil, einen organischen Anteil und ein Schlammanteil durch Mittel der Nasssiebung;
b3) Trennen des aus Schritt b2) resultierenden Sandanteils in einen Schlammanteil und einen Sandanteil, der aus Schritt b3) resultiert, mittels eines Zyklons.

7. Verfahren nach Anspruch 6, das weiterhin einen Schritt b4) aufweist, in dem ein Schuttanteil, der aus Schritt b2) resultiert, mit einem Schwertwäscher gereinigt wird und in einen leichten und einen schweren Schuttanteil getrennt wird.

8. Verfahren nach Anspruch 7, wobei der schwere Schuttanteil, der aus Schritt b4) resultiert, der Schuttanteil ist, der aus der physiochemischen Nasstrennung resultiert.

9. Verfahren nach einem der Ansprüche 6 bis 8, wobei eine Säule mit Aufwärtsströmung des Zyklons, vorzugsweise ein Hydrozyklon, einen Teil der organischen Substanzen, die in dem Sandanteil vorhanden sein können, aus dem Sandanteil entfernt, während der Sandanteil ebenso gewaschen wird.

10. Verfahren nach Anspruch 6, wobei der Sandanteil, der aus Schritt b3) resultiert, mit einem Entwässerungssieb in einem Schritt b5) entwässert wird.

11. Verfahren nach Anspruch 10, wobei der Sandanteil, der aus Schritt b5) resultiert, der Sandanteil ist, der aus der physiochemischen Nasstrennung resultiert.

12. Verfahren nach Anspruch 6, wobei der Schlammanteil, der aus Schritt b3) resultiert, in einer Lamellen-Absetzeinheit in einem Schritt b6) verdickt wird.

13. Verfahren nach Anspruch 12, wobei der verdickte Schlammanteil, der aus Schritt b6) resultiert, in einen Filterkuchen in einer Siebbandpresse in einem Schritt b7) umgewandelt wird.

14. Verfahren nach einem der vorhergehenden Ansprüche 6 - 13, wobei das magnetische Trennmittel einen Überbandmagnetscheider aufweist.

15. Verfahren nach einem der vorhergehenden Ansprüche, wobei die physiochemische Nasstrennung in einem geschlossenen Wasserkreislauf durchgeführt wird.

16. Verfahren nach Anspruch 15, wobei verschmutztes Wasser aus dem Wasserkreislauf entfernt wird und gereinigtes Wasser dem Wasserkreislauf zugeleitet wird.

17. Verfahren nach Anspruch 16, wobei das gereinigte Wasser das gesäuberte entfernte Wasser aufweist.

## Revendications

1. Procédé de traitement d'une cendre inférieure provenant d'une installation d'incinération de déchets, comprenant les étapes suivantes :
a) l'élimination des particules d'une taille > 70 mm de la cendre inférieure avec des moyens de filtration ;
b) la soumission de la cendre inférieure ayant des particules ≤ 70 mm, résultant de l'étape a), à une séparation physico-chimique par voie humide qui donne une fraction de sable, de gravats, organique et de boue ;
c) l'élimination des métaux non ferromagnétiques de la fraction de sable et de gravats avec des moyens de séparation ; et
d) l'immobilisation par voie chimique de la fraction de sable résultant de l'étape c) par carbonatation, dans lequel la carbonatation comprend l'ajout de ciment, de sable, de charbon actif et de dioxyde de carbone à la fraction de sable résultant de l'étape c).

2. Procédé selon la revendication 1, dans lequel les moyens de filtration comprennent un tamis à tambour.

3. Procédé selon l'une quelconque des revendications précédentes, dans lequel les moyens de séparation comprennent un séparateur à courant de Foucault.

4. Procédé selon l'une quelconque des revendications précédentes, dans lequel les moyens de séparation comprennent une combinaison d'un séparateur à courant de Foucault et d'un séparateur magnétique.

5. Procédé selon la revendication 4, dans lequel le séparateur magnétique comprend un séparateur magnétique à tambour.

6. Procédé selon l'une quelconque des revendications précédentes, dans lequel la séparation physico-chimique par voie humide comprend les étapes suivantes :
b1) l'élimination des métaux ferromagnétiques de la cendre inférieure ayant des particules ≤ 70 mm avec des moyens de séparation magnétique ;
b2) la séparation de la cendre inférieure résultant de l'étape b1) en une fraction de sable, une fraction de gravats, une fraction organique et une fraction de boue au moyen d'un tamisage par voie humide ;
b3) la séparation de la fraction de sable résultant de l'étape b2) en une fraction de boue et une fraction de sable résultant de l'étape b3) au moyen d'un cyclone.

7. Procédé selon la revendication 6, comprenant en outre une étape b4) dans laquelle la fraction de gravats résultant de l'étape b2) est nettoyée avec un décanteur et séparée en une fraction de gravats légers et une fraction de gravats lourds.

8. Procédé selon la revendication 7, dans lequel la fraction de gravats lourds résultant de l'étape b4) est la fraction de gravats résultant de la séparation physico-chimique par voie humide.

9. Procédé selon l'une des revendications 6 à 8, dans lequel une colonne à courant ascendant du cyclone, de préférence un hydrocyclone, élimine une partie des substances organiques qui peuvent être présentes dans la fraction de sable de la fraction de sable, tout en lavant également la fraction de sable.

10. Procédé selon la revendication 6, dans lequel la fraction de sable résultant de l'étape b3) est égouttée avec un tamis d'égouttage dans une étape b5).

11. Procédé selon la revendication 10, dans lequel la fraction de sable résultant de l'étape b5) est la fraction de sable résultant de la séparation physico-chimique par voie humide.

12. Procédé selon la revendication 6, dans lequel la fraction de boue résultant de l'étape b3) est épaissie dans une unité de décantation lamellaire dans une étape b6).

13. Procédé selon la revendication 12, dans lequel la fraction de boue épaissie résultant de l'étape b6) est convertie en un gâteau de filtration dans une presse à bande-tamis dans une étape b7).

14. Procédé selon l'une quelconque des revendications 6 à 13 précédentes, dans lequel les moyens de séparation magnétique comprennent un séparateur magnétique overband.

15. Procédé selon l'une quelconque des revendications précédentes, dans lequel la séparation physico-chimique par voie humide est effectuée dans un circuit d'eau fermé.

16. Procédé selon la revendication 15, dans lequel l'eau contaminée est retirée du circuit d'eau et de l'eau purifiée est fournie au circuit d'eau.

17. Procédé selon la revendication 16, dans lequel l'eau purifiée comprend de l'eau retirée nettoyée.
